# EUROPEAN PATENT APPLICATION

(11) **EP 4 802 885 A2**
(43) Date of publication of application: **09.09.2026**
(21) Application number: 26160069.6
(22) Date of filing: 23.02.2026
(51) Int. Cl.: A01K 11/00, A01K 29/00, A01M 31/00

(54) **SYSTEM FOR DETERMINING THE PRESENCE OF BATS IN AN AREA**

(30) Priority: 02.03.2025 NL 2039890
(71) Applicant: Bios Management B.V., 6702AA Wageningen (NL)
(72) Inventor: van Rooij, Richard Antonius Gerardus, Laren (NL); Dekker, Dirk-Pieter, Heino (NL); Dekker, Teunis, Wageningen (NL); Larsson, Sebastian José, Gillastig (SE)
(74) Representative: IP Maison

(57) **Abstract**

System for determining the presence of bats in an area, comprising:
- A number of ultrasonic sound detector units,
∘ configured to detect a bat sound and to store the detected sound or the detected sound-representing data together with a time stamp; wherein
∘ the detector units are distributed over the surface of the area;

- A central readout device for the detector units, configured for:
∘ reading out the detected sound stored by the detector units or the detected sound-representing data together with the time stamp, and for
∘ storing the detected sounds or the detected sound-representing data of the detector units in a data storage location such as a database, together with the time stamps and with location data of the detector units;

- A data processing device,
∘ for mapping the number of bat sounds on the basis of the locations within the area where they have been determined.

## Description

The present invention relates to a system for determining the presence of bats in an area. Bats are a protected animal species and an important component of urban biodiversity. Therefore, awareness and knowledge about their presence and movements is important, especially in urban areas where building or renovation activities are planned.

Renovation activities often relate to sustainability and as part thereof, insulation of - for instance roofs and cavity walls. These are however spots where bats may live, so that sustainability and environmental goals may conflict.

This forms a widely recognized issue at the intersection of energy-efficient housing and nature conservation in urban areas. While both address important sustainability issues, they are in conflict with each other, as retrofitting housing for energy efficiency squeezes co-inhabiting species and jeopardizes nature conservation in urban areas. While in principle this violates the nature conservation law, in circumstances where such breaches are unavoidable, municipalities are required to compensate for the loss of individuals, habitats and ecological infrastructure, and where possible provide plusses to support the species, such that the net result on the population is null or positive. To intelligibly provide compensation measures for loss of habitat, one needs to have a firm grip on the distribution of bats and the ecological infrastructure on which they depend, from their roosting areas, to their dependency on landscape elements in navigation, and the location of foraging areas throughout the seasons.

Traditionally, bat mapping has been mostly small scale, focussing at the level of single buildings, or foraging grounds. Measurements are mainly done manually, by crossing an area of interest, for instance by foot or bicycle, with a hand held measurement device. This has the disadvantage that if data is acquired, it is difficult to relate it to a specific time and place, and moreover, because measurements are made with the same device at various times and locations or with very few devices, the same bat may be encountered multiple times and also be registered multiple times, leading to small volume and therefore small value data that is hard to translate into effective actions. The current need requires area-wide mapping of species, for which new guidelines have been developed. These were grafted on traditional methodologies relying on handheld devices, which stretched these methods beyond its effective use, resulting in huge gaps and very sketchy overviews of the ecological infrastructure used by these species, altogether insufficient for the purpose it is meant to serve, a guaranteed compensation of habitat loss and conservation of species. For area-wide mapping of bats and their essential ecological infrastructural components the need for a novel approach and technology is very much felt.

The invention thereto proposes a system for determining the presence of bats in an area, comprising:
- A number of ultrasonic sound detector units,
   o configured to detect a bat sound and to store the detected sound or the detected sound-representing data together with a time stamp; wherein
   ∘ the detector units are distributed over the surface of the area;
- A central readout device for the detector units, configured for:
   o reading out the detected sound stored by the detector units or the detected sound-representing data together with the time stamp, and for
   o storing the detected sounds or the detected sound-representing data of the detector units in a data storage location such as a database, together with the time stamps and with location data of the detector units;
- A data processing device,
   o for mapping the bat sounds on the basis of the locations within the area where they have been determined.

The system according to the invention provides several advantages over the prior art. Using a novel sensor technology platform and analysis pipeline secures a standardized way of collecting and analysing high density data. The system according to the invention provides a high-density ecological sensing infrastructure enabling spatial inference at landscape scale. At a density of for instance between 25 and 200 and in particular about 100 sensors per square kilometre, register calls of nearby bats, which provides for a hitherto unprecedentedly dense data grid of call distribution over time and space. The very large amounts of data may be sorted, validated, identified by species and type of calls and integrated onto (online and/or interactive) maps with a very short turnaround time, such that the data can be used in (close to) real time. This offers a new level of detail in bat monitoring, and secures a solid basis for well informed species management and decision making on the basis of highly accurate and up-to-date data. The data processing device and/or part of its functionality may be formed or performed by multiple devices or by a cloud service.

As it may be desired or required to record multiple hours and even up to multiple days of recordings, directly (wirelessly) transmitting the data may be too time and energy consuming and in general requiring too much bandwidth. Therefore, the central readout device may be configured for physical coupling with the detector units, for reading out the detected sounds or data representing the detected sounds from the detector units, together with the time stamps and/or with location data of the detector units or identification means with which a detector unit can be linked to a location, and/or for charging their power source. Reading out the data of the ultrasonic sound detector units may be done via a direct data connection with a physical connection.

Preferably, in order to have the best chance for recording bat sounds, the detector units are suspended at a height between 2 and 6, and in particular between 3 and 5, and more in particular between 3.5 and 4.5 meters above ground level.

The prior art offers no mechanism by which a detector can be hung at this desired height, unless skylifts or cherrypickers are used, and dedicated suspension points are to be foreseen. It is therefore a further goal of the present invention to propose a system allowing for placing and removing the detectors safely, easy and quickly at height, for instance using a telescope pole.

In the system according to the invention, the detector units are therefore preferably attached to poles present in the urban environment, such as those of lanterns.

An attachment system, such as a c-clamp-type system may be employed for that purpose, but according to the invention, this can further be diversified using other fixing mechanisms depending on the specifics of the pole on which the detector is placed.

The detector unit may be configured for Bluetooth connectivity with which the date, time and geolocation of ultrasonic recordings of bat sounds are tagged, as well as permitting for a quick way of deploying the sensor. In addition, the detector unit may comprise built-in Wi-Fi or Bluetooth connectivity, switched on when the detector unit is docked into the central readout device and is used for reading out and subsequently purging data on the detector unit. It may further contain a LED unit that visibly indicates the status and condition of the detector unit and a battery pack that it may contain.

A detector unit according to the invention may further interlink with computer programs and app(lication)s for hand held devices, such as a field app for both for deployment and for taking the detector units down. Such an app may also direct field personnel in finding predetermined places, such as integrating lamp post position data and routing suggestions, where the sensors should be hung (or retrieved) and may allow for visual storing feedback to aid in this process. In particular, when positioning the detector unit, its geographical location and/or ID may be registered. This can be done by a hand held device, such as a smart phone, which then communicates the data to the central read out device and/or the data processing device. This information may later assist in recollecting the detector units. Such computer program or app may integrate with an (online) management system that may be used to roll out the system according to the invention area-wide and direct maintenance personnel to (geographically) optimize their activities.

In yet a further, advantageous embodiment, the detector units may have an integrated (software or hardware) audio filter that is configured to not record human sound by avoiding those wavelengths. Such provision renders the detector units and therewith the system according to the invention in line with EU privacy regulations, in contrast with first recording human sound and then using software filters to discard or mask it afterwards.

The filter may be configured for eliminating all sound frequencies below 3kHz, or even all frequencies below 15 kHz. It may do so before storing the recorded sounds.

The central readout device may serve as a power unit that houses a power supply for charging multiple, even up to hundreds of sensors. It may be composed of a number of standalone modules, for instance with about 84 units per module and a(n integrated or standalone) server with own Wi-Fi access points for data management of data collected with the detector units. As such safe and preferably also protected charging with a docking system may be provided. Indicator lights on the detector unit may indicate the status and conditions of each unit.

The central readout device may further comprise a detector unit management system that allows for managing detector units (management of data stored on the detector unit, providing for instance Over-The-Air (OTA) updates and may provide an interface for quality control and calibration.

The data processing device according to the invention may be configured for automated ID-ing of bat species. It may be trained through machine learning, based on data wherein bat traces in the sound recordings are annotated, for instance by ecologists.

The data processing device may be configured for automated distinguishing between different call types echolocation, social calls, feeding calls, and combinations. Distinguishing between different types of calls is used to label calls with potential functions such as roosts, navigation, foraging, and thus useful in the interpretation of the data beyond the ID-ing of species only and aids in for instance finding roosting sites. In particular the system according to the invention may be configured to (use the collected data for) roost location detection, movement corridors, colony distribution, activity hotspots, and/or behaviour pattern mapping. These possibilities are in particular enabled by the fact that there are multiple ultrasonic sound detector units at various locations at the same time. These simultaneous multi-point recordings are a distinguishing feature with respect to the prior art, and allow triangulation for instance to be able to pinpoint a roost, and also allow integration with external ecological data layers (e.g., buildings, landscape elements, infrastructure datasets) - to be able to deduce (car or bicycle) drivers taking measurements in the landscape. In order to enable triangulation, movement mapping, and timing analysis synchronized timestamps across ultrasonic sound detector units may be applied. This allows coordinated sampling across areas. Even if the ultrasonic sound detector units are placed on separate days they can start recording at the same time.

The data processing device may be configured to determine whether the call could be from a single bat, or from more multiple bats.

Processed data of bat sounds for each bat species may be displayed on a map. This can be displayed as for instance a heatmap, in which data points are interpolated using an algorithm. It can further be displayed as a time series over the course of a night at various intervals from every minute to only a few per night, which is important for localizing ecological infrastructural elements used by the bats to either roost, navigate, mate or feed. Time series can also be used across a season to find shifts in ecological infrastructural elements that bats use over time.

The data processing device of the system according to the invention may further comprise a project management system and a field worker app that directs field workers, allows for planning, check in and out sensors, making photos and utilizing resources and for annotating field observations.

A data analysis pipeline may be implemented as part of the data processing device for curating recordings, in particular facilitating skilled personnel such as ecologists to do so, and in general makes it possible to overlay data onto maps. The system may be configured to determine where bat roosts are located and thereto comprise algorithms for identifying suitable habitats and/or scoring bats suitable depending on housing landscape types.

The system may further comprise a bat database for storing information about collected bat calls and may be used for training and improving software in correctly recognizing bat species of the ultrasound recordings. This training may be done by annotating a data set first and subsequently using it to train artificial intelligence.

Based on collected ultrasound recordings, the system, according to the invention, may deliver custom-made interactive maps of bat activities, movements and the ecological infrastructure they use. These may be combined with other layers such as housing types, age, insulation level (energy label), but also other infrastructural components such as treelines, water bodies etc. The maps are essential for directing observers (often ecologists) in the field to effectively find roosting sites. Further, they may be used for further research and interpretation of data, and provide a basis of well-informed decision and action for species management.

A system according to the present invention allows t creation continuous monitoring networks. The present invention not only relates to a system, but also to a detector unit for use in such a system, comprising:
- a housing,
- at least one sensor incorporated therein for detecting a bat sound,
- a memory or storage unit, for storing the detected sound or data representing the detected sound together with a time stamp; and
- an interface for data exchange with a central readout device, for reading out stored sounds or data representing sounds and time stamps.

The detector unit may comprise a readable identification with which the detector unit can be distinguished from similar detector units, and/or further comprise a digital processing unit, configured to control the storage of ultrasonic sound, in particular at or from a specific time or between adjustable times, and/or from the moment of detection of an ultrasonic sound, more in particular a sound recognized as originating from a bat.

The detector unit may be provided with position determination means, such as a GPS provision. It may store its location when it is installed and provide this information, and/or annotate its sound recordings with position information.

The detector unit according to the invention may further comprise filter means, to filter human sounds from sound recordings, in particular prior to storage thereof. The way of filtering maybe through a hard- or software filter, configured for eliminating all sound frequencies below 3kHz, or even all frequencies below 15 kHz. It may do so before storing/saving the recorded sounds. This privacy-by-design filtering makes sure no personal / private data are collected in the public space.

The interface for data exchange with the central read out device may be a physical connection interface. The device may also comprise a charging interface, which may be configured for wireless (inductive) charging or charging via physical contact.

An advantage of contactless interfaces as wi-fi, Bluetooth and wireless charging are that the housing of the device may be fully closed and consequently it can be hermetically sealed, making it less vulnerable for outside use. Further it may comprise an energy source, such as a battery and/or solar panel, in particular configured to provide energy for at least 72 hours of storage capacity.

The housing is configured for attachment to a pole such as that of a lantern, and to that end comprise an engagement device such as the c-lamp described above, movable between a closed, i.e. engaging the pole, state and an open state, in particular movable from a distance.

The engagement device is then movable remotely, in particular with an auxiliary tool, between the pole engaging position and the opened position.

The present invention relates to a device for attaching an object, in particular a measuring instrument, to a pole-shaped support. More in particular, the invention relates to a device for use in a system for determining the presence of bats in an area as described in the Dutch patent application NL2039890 by the same applicant, which is herein incorporated by reference.

In this application, measurement devices for measuring ultrasonic sounds made by bats are to be positioned temporarily in urban spaces, at predetermined heights above ground level. One aim herein is to make use of the infrastructure that is already present as much as possible. An option that was considered was the use of lamp posts of street lamps. These usually comprise poles with heights of 3 to 7 metres, and as bat sounds are to be determined preferably at heights about 4 metres, this makes them very suitable. The present invention makes a standardized vertical placement with a consistent mounting height possible. Not only is there an ecological rationale for elevated positioning (improved detection at a specific height) but with the use of the same light poles year after year repeatable and comparable datasets may be created by consistent height placement.

As a result, a need has arisen for means for temporarily mounting measurement devices to the poles of lamp posts of street lamps. It is a goal of the present invention to provide such means, and in particular means that allow quick and easy mounting and removal of these measurement devices, without requiring heavy vehicles like so called cherry pickers.

The invention thereto proposes a device for attaching an object, in particular a measuring instrument, to a pole-shaped support, comprising:
- A support body for, preferably releasably, attaching the object thereto;
- A first clamping arm connected to the support body and movable relative to the support body;
- At least a second clamping arm connected to the support body; wherein
- the first clamping arm and the at least second clamping arm are arranged movably relative to each other; and wherein
- the device is provided with a biasing device for introducing a force that urges the first clamping arm and the at least second clamping arm toward each other.

The support body is in particular intended and/or configured attaching measurement devices, including and not limited to measuring ultrasonic sounds made by bats thereto. These measurement devices may be provided with a box-like housing, that may be configured to be coupled to the support body by any means that do not require further tooling, such as a clamping or clicking mechanism, or hooks and slots provided to either the support body or the housing of the measurement device or both.

The first and the at least second clamping arms are - as their name suggests - configured to mutually apply a clamping force to the pole-shaped support. As lamp posts of street lamps usually extend essentially vertically, the first and second clamping arms may be configured to provide a clamping force in a horizontal direction. "At least second" means that evidently, there may be third and further clamping arms according to the present invention.

Configurations are thinkable, wherein the first clamping arm is connected in a fixed way to the support body, or wherein it is integrally formed therewith. The second clamping arm is then movable to the support body and therewith also to the second clamping arm so that a (pole shaped) support can be introduced between them and be clamped between both.

In an embodiment according to the present invention, the second clamping arm is also movable relative to the support body. This has the advantage that the support body may act as a central and stable part during handling of the device, and that both clamping arms make an equal deflection when coupling the device to a support such as a pole. This makes overall handling easier, especially as it has to be done from a few metres distance.

The biasing device may comprise at least one spring. The spring may be arranged between the first clamping arm or the second clamping arm and the support body, but also between the first clamping arm and the second clamping arm.

The device according to the invention may further comprising a limiter, such as a stop surface or a cam, for limiting the movement of the clamping arms in each other's direction, and/or for defining a rest or end position in which the preloading device can urge the clamping arms relative to the support body. Such a limiter assists in defining a default position of the clamping arms which makes it easier to position the device for or before mounting it to a pole.

In order to keep the device in place once it is mounted on said pole, at least one of the first clamping arm, the second clamping arm, or the support body is provided with a friction element, such as a rubber block. The friction element may be provided at a side of the first or second clamping arm or of the support body that is in use directed to the pole.

For assisting the mounting of the device, at least one of the first or second clamping arms may be provided with a guide surface for urging the pole to a position between the first and second clamping arms by pressing the first and second clamping arms against a pole, thus moving the first and second clamping arms apart. When further positioning the device, the arms may be moved ahead the broadest point of the pole and move back toward each other, therewith locking the pole between them.

Preferably, both the first and second clamping arms are provided with a guide surface, which guide surfaces together comprise a tapered guide for the pair in a rest or end position of the first and second clamping arms, with the first and second clamping arms facing each other.

In order to reach the desired height of about 4 metres from ground level without stairs, cherry pickers and the like, a spacer, like a stem may be used, and the support body may to that end be provided with a mounting device for releasably attaching the device to such spacer. Releasing the device from the spacer should be possible from the position where the spacer is held.

Therefore the mounting device may comprise or form a striking plate for receiving a bolt provided on the spacer. The striking plate may be of the principle of a door, and the spacer must in that case evidently have the bolt for cooperation with the striking plate. Such a bolt may be remotely or by wire operable.

The device may be configured to lock in a closed position, as an anti-theft or vandalism protection. Such lock may limit the movement of the arms, at least partially. If the movement is completely locked, the arms cannot be moved. If the movement is partially locked, that means that there is a maximum opening width of the arms, which must be chosen so small that it cannot be removed from the pole. Locking and unlocking may preferably be done with the spacer. In particular the presence of the bolt of the spacer in the striking plate of the device may unlock the movement of the arms.

In yet a further embodiment according to the present invention, the device according to the invention may be provided with an attachment device for a measuring box. This may be a slot for a clip or the like. The device may be configured to engage a pole, such as a lamppost, with a diameter range of 40 to 100 mm.

The invention also relates to an assembly of a device as described above and a spacer, such as a stem, wherein the spacer is provided with a part that cooperates with the fastening device, such as a bolt provided on the spacer, and to the spacer, such as a stem, itself, provided with a part that cooperates with the fastening device, such as a bolt provided on the spacer.

The invention will now be elucidated into more detail, with reference to the following figures. Herein:
- Figure 1 shows a detector unit according to the invention;
- Figure 2 shows a central readout, and charge device according to the invention;
- Figure 3 shows locations of detector units on a map of an area; and
- Figure 4 shows an example of a map provided with data collected by the invention.
- Figure 5 shows a device according to the invention positioned next to a pole section;
- Figure 6 shows the device from figure 1 clamped to the pole section;
- Figure 7 shows the device from figures 1 and 2 with an object to be attached;
- Figure 8 shows the device from figure 3 with the object attached;
- Figure 9 shows a spacer, formed by a stem, for mounting a according to the present invention to a pole like structure;
- Figure 10 shows a spacer according to the invention;
- Figure 11 shows a detail of a spacer according to the invention; and
- Figure 12 shows a partly exploded view of a device for clamping an ultrasonic sound detector unit to a pole.

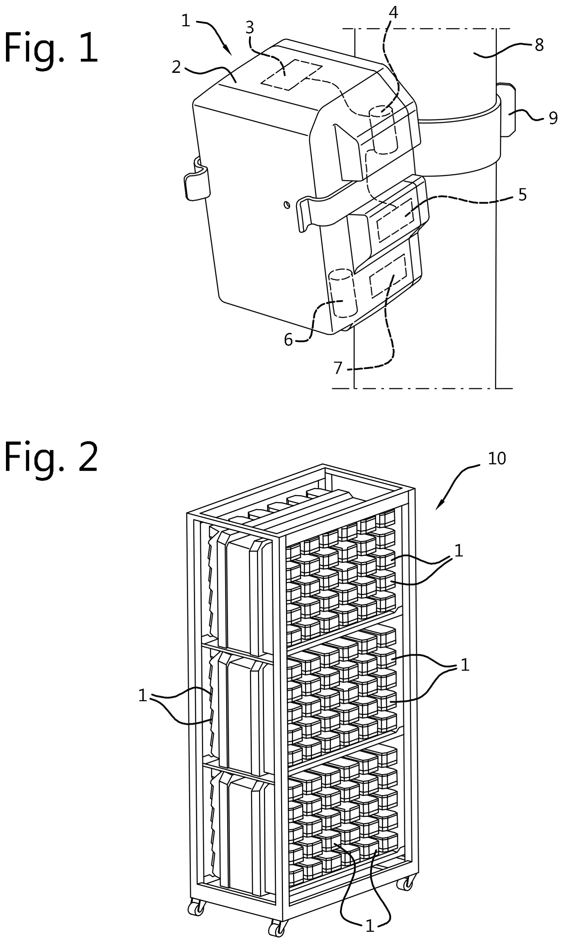

Figure 1 shows a detector unit 1 for use in a system according to the invention, comprising a housing 2, at least one sensor 3 incorporated therein for detecting a bat sound, a memory or storage unit 4, for storing the detected sound or data representing the detected sound together with a time stamp; and an interface 5 for data exchange with a central readout device, for reading out stored sounds or data representing sounds and time stamps. The detector unit 1 may further comprise a readable identification with which the detector unit 1 can be distinguished from similar detector units. This may be an optical code, readable from the outside of the housing 2, or an electronically readable code, that is retrieved together with the stored bat sound representing data. The detector unit may further comprise a digital processing unit 7, configured to control the storage of ultrasonic sound, in particular at or from a specific time or between adjustable times, and/or from the moment of detection of an ultrasonic sound, more in particular a sound recognized as originating from a bat. Furthermore, the detector unit comprises an energy source, formed by battery 6, in particular configured to provide energy for at least 48 hours of storage capacity. The housing is configured for attachment to a pole such as a lantern pole 8, and to that end comprises an engagement device 9, formed by a c-clamp that is movable between a closed state, i.e. engaging the pole as depicted, and an open state (not shown).

Figure 2 shows a central readout device 10 for the detector units, configured for reading out the detected sound stored by the detector units or the detected sound-representing data together with the time stamp, and for storing the detected sounds or the detected sound-representing data of the detector units in a data storage location such as a database, together with the time stamps and with location data of the detector units as well as a data processing device, for mapping the number of bat sounds on the basis of the locations within the area where they have been determined. The central readout device 10 is configured for charging the detector units 1, while reading out the detected sounds or data representing the detected sounds from the detector units may either be done wirelessly integrated into the central readout device or as a separate server, together with the time stamps and/or with location data of the detector units or identification means with which a detector unit can be linked to a location and/or for charging their power source.

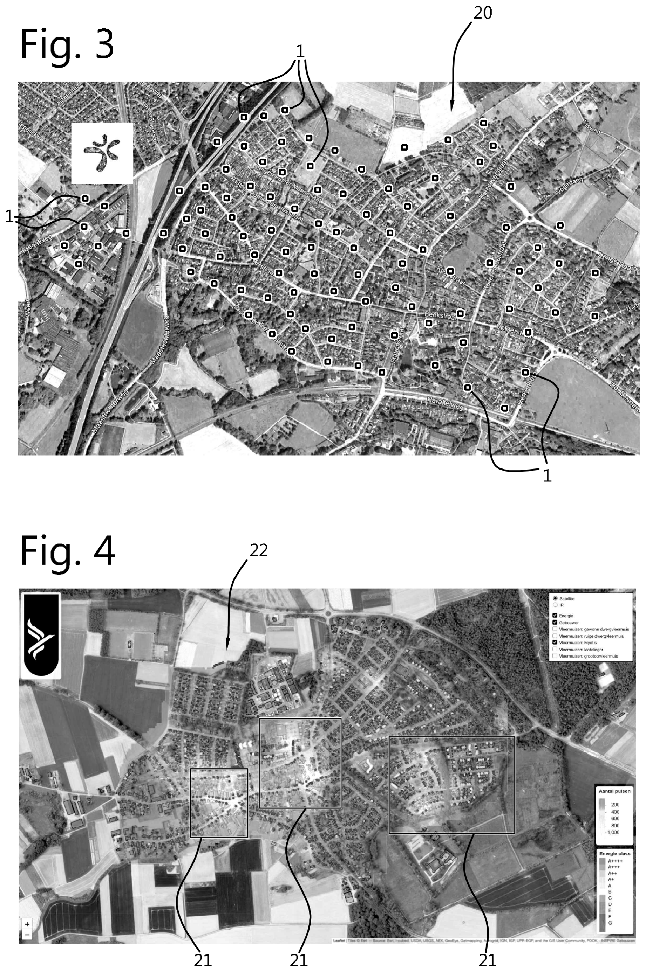

Figure 3 shows a self-explanatory map 20 of an area of interest, having numerous detector units 1 according to the invention spread over an area of interest.

Figure 4 shows an example of the data collected with a system according to the invention. Colour markings 21 were indicated in a new map 22 of the same area as the map 20, indicating the number of bat sounds heard at the specific spot in a certain time interval. Evidently numerous other quantities can be superimposed on the map.

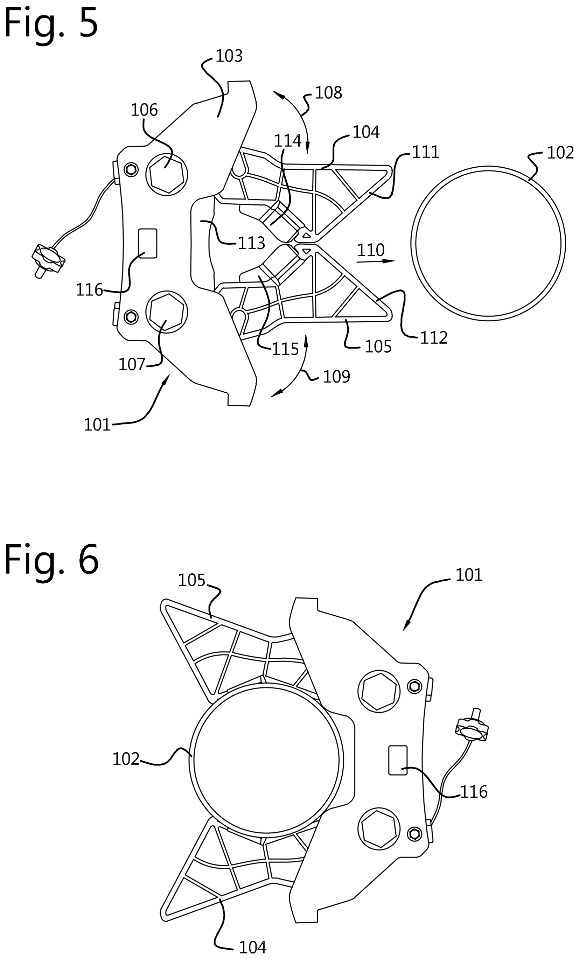

Figure 5 shows a device 1 according to the invention positioned next to a pole section 2. The device 1 comprises a support body 3 for releasably attaching an object (see figures 3 and 4) thereto, a first clamping arm 4 connected to the support body 3 and movable relative to the support body 3, and a least a second clamping arm 5 connected to the support body 3 wherein the first clamping arm 4 and the at least second clamping arm 5 are arranged movably relative to each other about respective axes of rotation 6, 7 in directions 8, 9 and wherein the device 1 is provided with a biasing device (not visible) for introducing a force that urges the first clamping arm 4 and the at least second clamping arm 5 toward each other. In this embodiment, both the first and the second clamping arm 4, 5 are movable relative to the support body.

The device 101 comprises a limiter, such as a stop surface or a cam, (not visible) for limiting the movement of the clamping arms 104, 105 in each other's direction, and/or for defining a rest or end position in which the preloading device can urge the clamping arms 104, 105 relative to the support body 103.

In the embodiment shown, the first clamping arm 104, the second clamping arm 105, and the support body 103 are provided with friction elements 113, 114, 115, formed by rubber blocks.

The first and second clamping arms are provided with a guide surfaces 111, 112 for urging the pole 102 to a position between the first and second clamping arms 104, 105 by pressing the first and second clamping arms in the direction 110 against the pole 102, thus moving the first and second clamping arms 104, 105 apart.

Figure 6 shows the device 101 from figure 5 clamped to the pole 102 section, as a result from a movement in the direction 110 indicated in figure 5. Visible is that the support body 101 is provided with a mounting device 116 formed by a slot for releasably attaching the device to a spacer such as a stem, comprising a bolt (not visible).

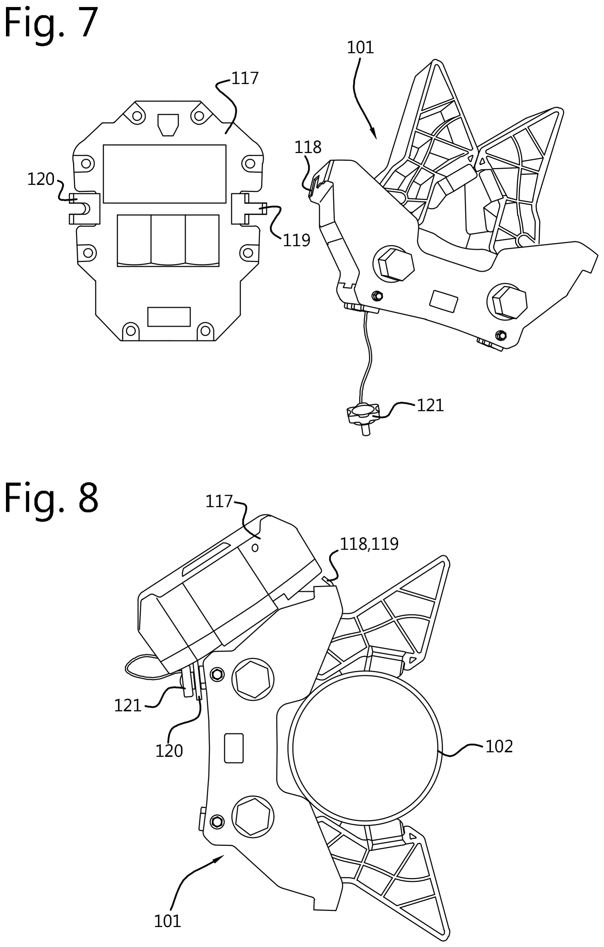

Figure 7 shows the device from figures 5 and 6 with an object to be attached, in the case shown a measurement for ultrasonic bat sounds. The device 101 is provided with a hole 118 for cooperation with a hook 119 of the object 117, and with a pin 1121 for cooperating with a slot 120 on the object 117.

Figure 8 shows the device 101 from figure 7 with the object 117 attached, clamped to a pole like support 102.

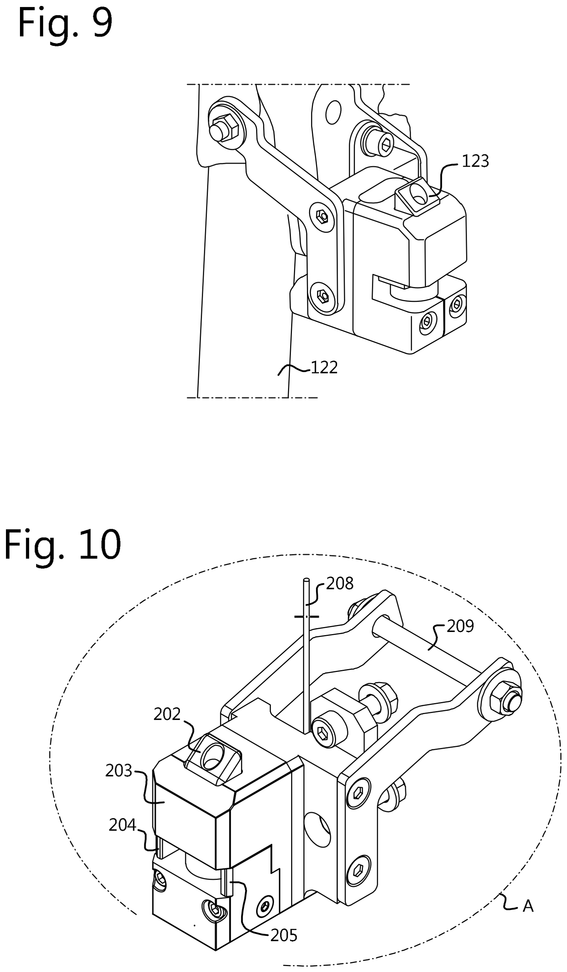

Figure 9 shows a spacer, formed by a stem 122, for mounting a according to the present invention to a pole like structure. The stem is provided with a notch 1123 for cooperation with slot 16.

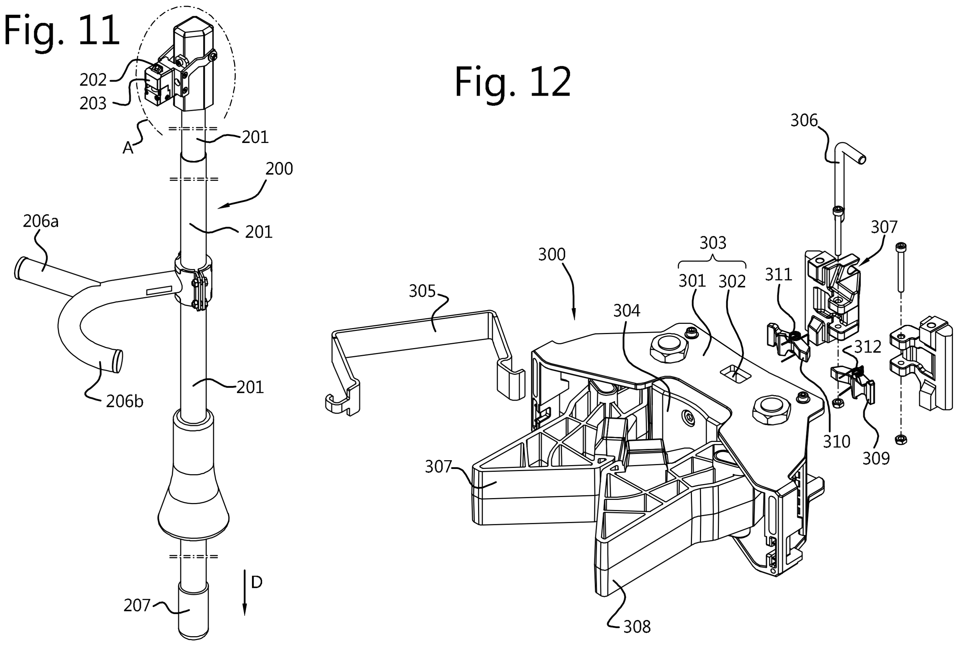

Figure 10 shows a spacer 200 according to the invention. The spacer comprises a stem 201, configured for releasably attaching a s support body (see figure 12) for an ultrasonic sound detector unit.

Such support body (300, visible in figure 12) may to that end be provided with a mounting device for releasably attaching the device to such spacer. The mounting device 303 may comprise or form a striking plate 301 in particular comprising a slot 302 for receiving a bolt 202 provided on the spacer 200.

The spacer 200 thereto comprises a coupling block 203 comprising a bolt 202. The bolt 202 can preferably be operated remotely between a locked and an unlocked position, by means of a control body 207, that - in this case - retracts and thus unlocks the bolt by pulling the control body 207 in a direction D extending in the direction of the stem 201.

The stem 201 is provided with a first support 206a for use as a pushing location for positioning an ultrasonic sound detector unit, and a second support 206b for use as a pulling location for positioning an ultrasonic sound detector unit.

Figure 11 shows a detail A of the spacer 200 from figure 10. In detail the coupling block 203 is visible, comprising the bolt 202. The coupling block 203 is coupled. to the stem 201 by means of a bracket with a pin 209. A wire 208 connects the bolt 202 with the control body 207. Finally, two pushing surfaces 204, 205 are visible. Their use will be elucidated with reference to figure 12. Figure 12 shows again according to the invention a device 300 for attaching an ultrasonic sound detector unit (not shown) to a pole-shaped support (not shown), comprising a support body 304 for releasably attaching the sonic sound detector unit thereto by means of a clamp 305. The clamp can be quickly locked and released with a locking pin 306 that on its turn can be secured with a snap-lock 307 in its locked position. The device 300 is provided with mutually movable clamping arms 307, 308. The movement of the arms is normally blocked by pawels 309 and 310, in their spring 311, 312 biassed default positions.

When the support body 304 is engaged with the coupling block 203 (visible in figure 11), the pushing surfaces 204, 205 press the pawels 309 and 310 from their default position and allow movement of the clamping arms to mutually move. A device according to the invention may (for instance this way) be only detached from a pole when coupled to a spacer.The embodiments shown are examples only and do not limit the scope of protection of the present application as defined in the following claims.

### Clauses

1. Device for attaching an object, in particular a measuring instrument, to a pole-shaped support, comprising:
   - A support body for, preferably releasably, attaching the object thereto;
   - A first clamping arm connected to the support body and movable relative to the support body;
   - At least a second clamping arm connected to the support body;
   wherein
   - the first clamping arm and the at least second clamping arm are arranged movably relative to each other;
   and wherein
   - the device is provided with a biasing device for introducing a force that urges the first clamping arm and the at least second clamping arm toward each other.
2. Device according to claim 1, wherein the second clamping arm is also movable relative to the support body.
3. Device according to claim 1 or 2, wherein the biasing device comprises at least one spring.
4. Device according to any of the preceding claims, comprising a limiter, such as a stop surface or a cam, for limiting the movement of the clamping arms in each other's direction, and/or for defining a rest or end position in which the preloading device can urge the clamping arms relative to the support body.
5. Device according to any of the preceding claims, wherein at least one of the first clamping arm, the second clamping arm, or the support body is provided with a friction element, such as a rubber block.
6. Device according to any of the preceding claims, wherein at least one of the first or second clamping arms is provided with a guide surface for urging the pole to a position between the first and second clamping arms by pressing the first and second clamping arms against a pole, thus moving the first and second clamping arms apart.
7. Device according to claim 6, wherein the first and second clamping arms are provided with a guide surface, which guide surfaces together comprise a tapered guide for the pair in a rest or end position of the first and second clamping arms, with the first and second clamping arms facing each other.
8. Device according to any of the preceding claims, wherein the support body is provided with a mounting device for releasably attaching the device to a spacer, such as a stem.
9. Device according to claim 8, wherein the mounting device comprises or forms a striking plate for receiving a bolt provided on the spacer.
10. Device according to any of the preceding claims, provided with an attachment device for a measuring box.
11. Device according to any of the preceding claims, configured to engage a pole, such as a lamppost, with a diameter range of 5 to 10 cm.
12. Device according to any of the preceding claims, configured to lock in a position, in particular a closed position wherein the clamping arms enclose a pole, as an anti-theft or vandalism protection, wherein the lock limits the movement of the clamping arms, at least partially.
13. Assembly of a device according to any of the preceding claims and claim 8 or 9 and a spacer, such as a stem, wherein the spacer is provided with a part that cooperates with the fastening device, such as a bolt provided on the spacer.
14. Assembly according to claim 12 and 13, wherein locking and unlocking is done with the spacer, in particular with the presence of the bolt of the spacer in the striking plate of the device.
15. Spacer, such as a stem, provided with a part that cooperates with the fastening device, such as a bolt provided on the spacer.

## Claims

1. System for determining the presence of bats in an area, comprising:
- A number of ultrasonic sound detector units,
o configured to detect a bat sound and to store the detected sound or the detected sound-representing data together with a time stamp; wherein
o the detector units are distributed over the surface of the area;
- A central readout device for the detector units, configured for:
o reading out the detected sound stored by the detector units or the detected sound-representing data together with the time stamp, and for
o storing the detected sounds or the detected sound-representing data of the detector units in a data storage location such as a database, together with the time stamps and with location data of the detector units;
- A data processing device,
o for mapping the bat sounds on the basis of the locations within the area where they have been determined.

2. System according to claim 1, wherein the central readout device is configured for physical coupling with the detector units, for reading out the detected sounds or data representing the detected sounds from the detector units, together with the time stamps and/or with location data of the detector units or identification means with which a detector unit can be linked to a location and/or for charging a power source of the detector unit and/or for erasing data on the detector unit and/or performing a software update on the detector unit.

3. System according to claim 1, wherein the detector units are suspended at a height between 2 and 6, and in particular between 3 and 5, and more in particular between 3.5 and 4.5 meters above ground level.

4. System according to claim 1 or 2, wherein the detector units are attached to poles present in the urban environment, such as those of lanterns.

5. System according to one of the preceding claims, wherein the data processing device is configured for projecting data based on the measured bat sounds on a map of the area.

6. System according to any of the preceding claims, wherein the data processing device is configured for performing at least one of:
- automated ID-ing of bat species, in particular trained through machine learning, in particular based on data wherein bat traces in the sound recordings are annotated, for instance by ecologists;
- automated distinguishing between different call types echolocation, social calls, feeding calls, and combinations
- labelling calls with potential functions such as roosts, navigation, foraging, and thus useful in the interpretation of the data beyond the ID-ing of species only and aids in for instance finding roosting sites;
- determining whether the call could be from a single bat, or from more multiple bats.
- localizing ecological infrastructural elements used by the bats to roost, navigate, mate or feed.

7. Detector unit for use in a system according to one of the preceding claims, comprising:
- a housing,
- at least one sensor incorporated therein for detecting a bat sound,
- a memory or storage unit, for storing the detected sound or data representing the detected sound together with a time stamp; and
- an interface for data exchange with a central readout device, for reading out stored sounds or data representing sounds and time stamps.

8. Detector unit according to claim 7, comprising position determination means, such as a GPS device, and configured for storing its position, in particular by annotating the stored sound with position data.

9. Detector unit according to claim 7or 8, further comprising a digital processing unit, configured to control the storage of ultrasonic sound, in particular at or from a specific time or between adjustable times, and/or from the moment of detection of an ultrasonic sound, more in particular a sound recognized as originating from a bat.

10. Detector unit according to claim 7, 8 or 9, comprising an energy source, such as a battery and/or solar panel, in particular configured to provide energy for at least 72 hours of storage capacity.

11. Detector unit according to one of claims 7-10, wherein the housing is configured for attachment to a pole such as a lantern pole, and to that end comprises a movable engagement device at a distance between a closed, i.e. engaging the pole, state and an open state.

12. Detector unit according to claim 11, wherein the engagement device is movable remotely, in particular with an auxiliary tool, between the pole engaging position and the opened position.

13. Detector unit according to any of claims 7-12, configured for Bluetooth or wifi connectivity with near devices and/or with the central readout device.

14. Detector unit according to any of claims 7-13, comprising an audio filter that is configured to remove human sound from a sound recording before it is saved, in particular to remove audio frequencies below 3kHz and more in particular audio frequencies below 15 khZ.

15. Device for attaching an object, in particular a measuring instrument, to a pole-shaped support, comprising:
- A support body for, preferably releasably, attaching the object thereto;
- A first clamping arm connected to the support body and movable relative to the support body;
- At least a second clamping arm connected to the support body;
wherein
- the first clamping arm and the at least second clamping arm are arranged movably relative to each other;
and wherein
- the device is provided with a biasing device for introducing a force that urges the first clamping arm and the at least second clamping arm toward each other.
